# EUROPEAN PATENT SPECIFICATION

(11) **EP 1 756 838 B1**
(45) Date of publication and mention of the grant of the patent: **18.08.2010**
(21) Application number: 05708880.9
(22) Date of filing: 01.03.2005
(51) Int. Cl.: G21C 3/62

(54) **NUCLEAR FUEL**
KERNBRENNSTOFF
COMBUSTIBLE NUCLEAIRE

(30) Priority: 01.03.2004 ZA 200401665
(43) Date of publication of application: 28.02.2007
(73) Proprietor: Pebble Bed Modular Reactor (Proprietary) Limited, 0046 Centurion (ZA)
(72) Inventor: KUCZYNSKI, Leszek, Andrzej, 0042 PRETORIA (ZA)
(74) Representative: Moreland, David
(86) International application number: PCT/IB2005/050736
(87) International publication number: WO 2005/088647

(56) References cited:
- US-A- 3 992 258
- US-A- 4 212 898
- US-A- 4 267 019

## Description

This INVENTION relates to nuclear fuel. More particularly, the invention relates to a method of preparing a nuclear fuel, to a nuclear fuel particle and to a nuclear fuel element.

In a nuclear reactor of the high temperature gas-cooled type, use is made of fuel comprising a plurality of generally spherical fuel elements. The fuel elements include a core comprising fuel particles, each having a kernel of fissile material, dispersed in a matrix. The spherical fuel elements are known as pebbles and the nuclear reactor of this type is generally known as a pebble bed reactor.

According to one aspect of the invention, there is provided a method of preparing a nuclear fuel, which method includes the steps of depositing silicon carbide on a nuclear fuel surface; and
at least partly reducing the silicon carbide to diamond having a thickness of between 8 micrometres and 90 micrometres.

Preferably, the silicon carbide deposited will be beta polytype silicon carbide. The deposition may be by chemical vapor deposition techniques.

Reducing the silicon carbide may include reacting the silicon carbide with hydrogen chloride or chlorine. Naturally, however, any other suitable reducing agent may be used.

According to another aspect of the invention, there is provided a nuclear fuel element which includes a core comprising a plurality of nuclear fuel particles dispersed in a matrix, each fuel particle having a kernel of fissile material and diamond deposited around the kernel.

The diamond may have a thickness of between about 8 micrometres and about 90 micrometres. More particularly, the diamond may have a thickness of 40 micrometres.

Each fuel particle may have at least one carbon material or compound, selected from the group consisting of porous carbon, pyrolytic carbon, silicon carbide and silicon-nitride-bonded-silicon carbide, deposited around the kernel.

More particularly, each fuel particle may have deposited on its kernel, in sequence, porous carbon, pyrolytic carbon, silicon carbide and/or silicon-nitride-bonded-silicon-carbide, and diamond.

The porous carbon may be deposited to a thickness of between about 10 micrometres and about 90 micrometres, preferably about 95 micrometres. The pyrolytic carbon may be deposited to a thickness of between about 10 micrometres and about 90 micrometres, preferably about 40 micrometres.

The silicon carbide and/or silicon-nitride-bonded-silicon-carbide may have a thickness of about 30 micrometres.

According to still another aspect of the invention, there is provided a nuclear fuel element, which includes
a core comprising a plurality of fuel particles, each having a kernel of fissile material, dispersed in a matrix; and
a diamond coating deposited on the core.

Each fuel particle may have a kernel of fissile material surrounded by a coating including at least one carbon material or compound selected from the group consisting of porous carbon, pyrolytic carbon, silicon carbide, silicon-nitride-bonded-silicon-carbide and diamond.

The fuel particles may be dispersed in a graphite matrix. More particularly, the matrix may comprise graphite powder and phenolic resin.

The nuclear fuel element may be generally spherical in shape. The nuclear fuel element may have a diameter of between about 50 millimetres and about 100 millimetres, preferably between about 55 millimetres and about 60 millimetres.

According to a still further aspect of the invention, there is provided a nuclear fuel particle, which includes a kernel of a fissile material and diamond deposited around the kernel.

The kernel may be provided by a uranium dioxide particle.

The diamond may be deposited to a thickness of between about 8 micrometres and about 90 micrometres. More particularly, the diamond may have a thickness of 40 micrometres.

The fuel particle may have at least one carbon material or compound, selected from the group consisting of porous carbon, pyrolytic carbon, silicon carbide and silicon-nitride-bonded-silicon-carbide, deposited around the kernel.

More particularly, the fuel particle may have deposited on its kernel, in sequence, porous carbon, pyrolytic carbon, silicon carbide and/or silicon-nitride-bonded-silicon-carbide, and diamond.

The porous carbon may be deposited to a thickness of between about 10 micrometres and about 90 micrometres, preferably about 95 micrometres. The pyrolytic carbon may be deposited to a thickness of between about 10 micrometres and about 90 micrometres, preferably about 40 micrometres.

The invention will now be described, by way of example, with reference to the accompanying diagrammatic drawings and the following Examples:
In the drawings,
   Figure 1 shows a part-sectional perspective view of a coated nuclear fuel particle in accordance with the invention; and
   Figure 2 shows a cross-sectional perspective view of a nuclear fuel element in accordance with the invention.

### Example 1

A plurality of nuclear fuel particles was formed by atomisation of uranyl nitrate to form microspheres. The microspheres were then gelled and basked at a high temperature, ie. calcinated, to yield uranium dioxide particles, each to provide a kernel of fissile material for a nuclear fuel particle.

A batch of uranium dioxide particles was suspended in a fluidised bed type deposition chamber of a chemical vapor deposition reactor, the deposition chamber having an argon environment. The deposition chamber was heated to a temperature of about 1000 degrees Celsius.

Porous carbon was deposited on the surface of the uranium dioxide particles to a thickness of 95 micrometres. Next, pyrolytic carbon was deposited on the porous carbon coated surface of the uranium dioxide particles to a thickness of 40 micrometres.

Silicon carbide of about 70 micrometers thickness was deposited on the pyrolytic carbon coated surfaces of the fuel particle kernels. The deposition was carried out a pressure of 1.5 kPa.

The source gases for deposition were then switched to pure argon at a pressure of between 1 kPa and 2 kPa in a manner that ensured minimal disturbance of the floating bed dynamics of the coater volume. The temperature of the circulating argon was decreased to 950 degrees Celsius and argon circulation was maintained for fifteen minutes.

A chlorine (Cl₂) source was then connected to an inlet end of the deposition chamber whilst maintaining the temperature of about 950 degrees Celsius. The silicon carbide was reduced to diamond to a depth of about 40 micrometres such that silicon carbide of thickness about 30 millimetres underlies the diamond.

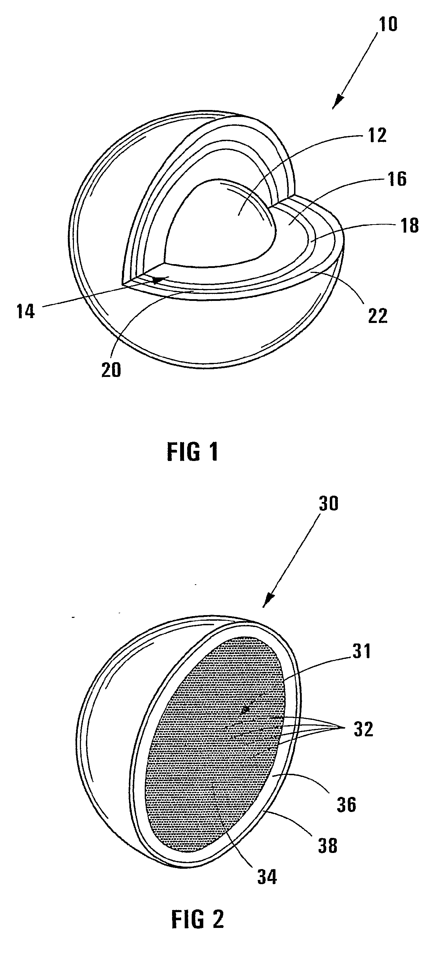

Reference is made to Figure 1 of the drawings, in which reference numeral 10 refers generally to a coated nuclear fuel particle of the invention, prepared in accordance with the above Example. The coated fuel particle 10 includes a kernel 12 comprised of a uranium dioxide particle. A coating, generally indicated by reference numeral 14, is deposited on the kernel 12, the coating 14 including porous carbon 16 deposited to a thickness of about 95 micrometres, pyrolytic carbon 18 deposited to a thickness of about 40 micrometres, silicon-nitride-bonded-silicon-carbide 20 deposited to a thickness of about 30 micrometres, and diamond 22 of 40 micrometres thickness. Figure 1 is for illustrative purposes only and it is to be appreciated that, as a result of the coating/deposition process being carried out whilst at all times maintaining a high temperature, ie. not permitting the temperature to drop to below 1000 degrees Celsius, boundaries between different compounds/materials deposited are not clearly defined in practice and a composite coating is formed.

### Discussion

Preferably, a single silicon carbide crystallographic type, viz. beta-type silicon carbide is deposited as the silicon carbide. Where the fraction of alpha-type silicon carbide is greater than 5 %, internal stresses arise within the deposited material which reduce the strength thereof.

Treatment of the coated fuel particles in the pure argon environment at 950 degrees Celsius serves to reduce internal, or intergranular, voids arising from thermal stress attendant upon intensive cooling, as well as to give an optimum temperature for the silicon carbide reduction process.

Instead of adding chlorine gas to the argon stream, hydrogen chloride vapor may be used as a reducing agent.

The reduction of silicon carbide occurs in accordance with the following reaction:

SiC + Cl₂ → C + SiCl₂,

or, where hydrogen chloride is used as reducing agent:

SiC + 2HCl → C + SiCl₂ + H₂

At the temperature of about 950 degrees Celsius, the carbon crystallises in an sp2 hybridised face-centred cubic structure, ie. to yield its allotrope of diamond.

The reduction process may be continued until the entire depth of silicon carbide has been reduced, or reduction may be terminated when the desired thickness of diamond is obtained, such that silicon carbide underlies the diamond.

The sizes of diamond crystals in the diamond layer formed range from about 2 nanometers to about 10 nanometers, with more than 70 % of crystals falling within the 2 nanometer to 4 nanometer limit.

Long term neutron irradiation is understood to lead to graphitisation of diamond. Diamond crystals larger than 8 nanometers in size are expected to undergo graphitisation after 300 days of irradiation at a flux of 6 x 10²⁴ neutrons per square centimeter. The resulting mixture of diamond and graphite, in a ratio of approximately 95% to 5%, is expected to show reduced strength properties but has improved adhesion properties over pure diamond and is harder.

The Applicant believes that the method of the invention will yield nuclear fuel particles having improved strength, the outer diamond coating of the fuel particles being able to withstand quasi-dynamically applied contact pressure of the order of 30 GPa without microcracks forming. It is believed that this will facilitate the protection of the fuel particles from damage which can otherwise result from pressing the fuel particles dispersed in a matrix mixture into spherical nuclear fuel elements. Further, it is believed that the resistance of the fuel particles to oxidation will be improved due to the low rate of oxidation of diamond at high temperatures.

The Applicant believes that the method of the invention will yield coated nuclear fuel particles having improved fission product-retention properties.

### Example 2

A plurality of nuclear fuel particles was formed by atomisation of uranyl nitrate to form microspheres. The microspheres were then gelled and baked at a high temperature, ie. calcinated, to yield uranium dioxide particles, each to provide a kernel of fissile material for a nuclear fuel particle.

A batch of uranium dioxide particles was suspended in a deposition chamber of a chemical vapor deposition reactor, the deposition chamber having an argon environment. The deposition chamber was heated to a temperature of about 1000 degrees Celsius.

Carbon material and carbon compounds, selected from the group consisting of porous carbon, pyrolytic carbon, silicon carbide, silicon nitride bonded silicon carbide and diamond, were deposited on the surface of the uranium dioxide particles to yield generally spherical fuel particles of diameter about 1 millimeter.

Some 15 000 of these coated fuel particles were mixed with approximately 200 g of a matrix material comprising 80 % by mass graphite powder and 20 % by mass phenolic resin. The resulting mixture was pressed into spheres which were machined to a diameter of about 50 millimeters to yield cores for nuclear fuel elements. Each core thus includes a plurality of fuel particles, incorporating a fissile material, dispersed in a matrix and has a mass of about 210 grams.

A batch of such nuclear fuel element cores was suspended in a deposition chamber of a chemical vapor deposition reactor, the deposition chamber having an argon environment. To ensure free stable flotation of the fuel element cores within the coater volume, chemical precursors for deposition were transported through the deposition chamber at a rate of flow in accordance with their temperature and pressure so as to maintain the fuel element cores in a suspended condition.

Silicon carbide was deposited to a thickness of about 0.5 millimetres on the surfaces of the cores. The deposition was carried out a pressure of between 0.01 kPa and 0.7 kPa.

The source gases for deposition were then switched to pure argon at a pressure of between 1.5 kPa and 2 kPa in a manner that ensured minimal disturbance of the floating bed dynamics of the coater volume. The temperature of the circulating argon was decreased to 950 degrees Celsius and argon circulation was maintained for fifteen minutes.

A chlorine (Cl₂) source was then connected to an inlet end of the deposition chamber whilst maintaining the temperature of about 950 degrees Celsius. The silicon carbide deposited on the cores was reduced to diamond through the full depth of silicon carbide.

Reference is now made to Figure 2 of the drawings, in which reference numeral 30 refers generally to a coated nuclear fuel element of the invention, prepared in accordance with Example 2 above. The coated fuel element 30 includes a core 31 of spherical form and having a diameter of about 50 millimetres. The core 31 includes of the order of 15 000 coated fuel particles 32, each having a kernel of fissile material (not shown), dispersed in a matrix 34. The matrix 34 comprises graphite powder and phenolic resin. About 5 millimetres of graphite 36 is deposited on the core 31 followed by diamond 38 to a thickness of about 240 micrometres.

### Discussion

It is believed that, due to the mechanical wear resistance properties of the diamond protective outer coating, fuel element wear and the attendant production of irradiated dust (as a result of fuel element wear) will be reduced by at least 80 %. This will improve the environmental safety of a nuclear reactor employing the fuel elements of the invention as nuclear fuel, eg. in the event of pipe or casing rupture in the nuclear reactor.

The Applicant further believes that the diamond outer coating of the fuel elements of the invention will provide an additional barrier to fission product release which will reduce the diffusion of fission product contaminants into the working fluid, typically helium, of the nuclear reactor.

Simulations show that the number of damaged fuel elements will be reduced one hundred thousand-fold and that the probability of fuel element disintegration or cracking will be reduced one thousand times, in the fuel elements of the invention as a result of the high contact pressure resistance of the diamond protective outer layer.

## Claims

1. A method of preparing a nuclear fuel, which method includes the steps of
depositing silicon carbide on a nuclear fuel surface; and
at least partly reducing the silicon carbide to diamond having a thickness of between 8 micrometres and 90 micrometres.

2. A method as claimed in Claim 1, in which the silicon carbide deposited is beta polytype silicon carbide.

3. A method as claimed in Claim 1 or Claim 2, in which the deposition is by chemical vapor deposition techniques.

4. A method as claimed in any one of the preceding claims, in which at least partly reducing the silicon carbide includes reacting the silicon carbide with hydrogen chloride or chlorine.

5. A nuclear fuel element which includes a core comprising a plurality of nuclear fuel particles dispersed in a matrix, each fuel particle having a kernel of fissile material and diamond deposited around the kernel.

6. A nuclear fuel element as claimed in Claim 5, in which the diamond has a thickness of between 8 micrometres and 90 micrometres.

7. A nuclear fuel element as claimed in Claim 6, in which the diamond has a thickness of 40 micrometres.

8. A nuclear fuel element as claimed in any one of Claims 5 to 7, inclusive, in which each fuel particle has at least one carbon material or compound, selected from the group consisting of porous carbon, pyrolytic carbon, silicon carbide and silicon-nitride-bonded-silicon-carbide, deposited around the kernel.

9. A nuclear fuel element as claimed in Claim 8, in which each fuel particle has deposited on its kernel, in sequence, porous carbon, pyrolytic carbon, silicon carbide and/or silicon-nitride-bonded-silicon-carbide, and diamond.

10. A nuclear fuel element as claimed in Claim 9, in which the porous carbon is deposited to a thickness of between 10 micrometres and 90 micrometres.

11. A nuclear fuel element as claimed in Claim 10, in which the porous carbon is deposited to a thickness of 95 micrometres.

12. A nuclear fuel element as claimed in any one of Claims 9 to 11. inclusive, in which the pyrolytic carbon is deposited to a thickness of between 10 micrometres and 90 micrometres.

13. A nuclear fuel element as claimed in Claim 12, in which the pyrolytic carbon is deposited to a thickness of 40 micrometres.

14. A nuclear fuel element as claimed in any one of Claims 9 to 13, inclusive, in which the silicon carbide and/or silicon-nitride-bonded-silicon-carbide has a thickness of 30 micrometres.

15. A nuclear fuel element, which includes
a core comprising a plurality of fuel particles, each having a kernel of fissile material, dispersed in a matrix; and
a diamond coating deposited around the core.

16. A nuclear fuel element as claimed in Claim 15, in which each fuel particle has a kernel of fissile material surrounded by a coating including at least one carbon material or compound selected from the group consisting of porous carbon, pyrolytic carbon, silicon carbide, silicon-nitride-bonded-silicon-carbide and diamond.

17. A nuclear fuel element as claimed in Claim 15 or Claim 16, in which the fuel particles are dispersed in a graphite matrix.

18. A nuclear fuel element as claimed in Claim 17, in which the matrix comprises graphite powder and phenolic resin.

19. A nuclear fuel particle, which includes a kernel of uranium dioxide and diamond deposited around the kernel.

20. A nuclear fuel particle as claimed in Claim 19, in which the diamond is deposited to a thickness of between 8 micrometres and 90 micrometres.

21. A nuclear fuel particle as claimed in Claim 20, in which the diamond has a thickness of 40 micrometres.

22. A nuclear fuel particle as claimed in any one of Claims 19 to 21, inclusive, which has at least one carbon material or compound, selected from the group consisting of porous carbon, pyrolytic carbon, silicon carbide and silicon-nitride-bonded-silicon carbide, deposited around the kernel.

23. A nuclear fuel particle as claimed in Claim 22, which has deposited on its kernel, in sequence, porous carbon, pyrolytic carbon, silicon carbide and/or silicon-nitride-bonded-silicon-carbide, and diamond.

## Patentansprüche

1. Verfahren zur Herstellung eines Kernbrennstoffes, das die Schritte der Abscheidung von Siliziumkarbid auf der Oberfläche eines Kernbrennstoffes und der zumindest teilweise erfolgenden Reduktion des Siliziumkarbids zu Diamant auf eine Dicke zwischen 8 Mikrometern und 90 Mikrometern umfasst.

2. Verfahren nach Anspruch 1, **dadurch gekennzeichnet, dass** das abgeschiedene Siliziumkarbid der Polytyp Beta-Siliziumkarbid ist.

3. Verfahren nach Anspruch 1 oder 2, **dadurch gekennzeichnet, dass** die Abscheidung mit chemischen Gasphasenabscheidungsmethoden erfolgt.

4. Verfahren nach einem der vorhergehenden Ansprüche, **dadurch gekennzeichnet, dass** die zumindest teilweise erfolgende Reduktion des Siliziumkarbids die Reaktion des Siliziumkarbids mit Chlorwasserstoff oder Chlor umfasst.

5. Kernbrennstoffelement mit einem Kern, der eine Mehrzahl von Kernbrennstoffpartikeln in einer Matrix umfasst, wobei jedes Brennstoffpartikel einen Kern spaltbaren Materials und um den Kern herum abgeschiedenen Diamant hat.

6. Kernbrennstoffelement nach Anspruch 5, **dadurch gekennzeichnet, dass** der Diamant eine Dicke zwischen 8 Mikrometern und 90 Mikrometern hat.

7. Kernbrennstoffelement nach Anspruch 6, **dadurch gekennzeichnet, dass** der Diamant eine Dicke von 40 Mikrometern hat.

8. Kernbrennstoffelement nach einem der Ansprüche 5 bis 7, **dadurch gekennzeichnet, dass** jedes Brennstoffpartikel mindestens ein Kohlenstoffmaterial oder eine Kohlenstoffverbindung hat, das bzw. die aus der Gruppe bestehend aus porösem Kohlenstoff, pyrolytischem Kohlenstoff, Siliziumkarbid und Siliziumnitrid-gebundenem Siliziumkarbid ausgewählt und um den Kern herum abgeschieden ist.

9. Kernbrennstoffelement nach Anspruch 8, **dadurch gekennzeichnet, dass** jedes Brennstoffpartikel auf seinem Kern nacheinander porösen Kohlenstoff, pyrolytischen Kohlenstoff, Siliziumkarbid und/oder Siliziumnitrid-gebundenes Siliziumkarbid und Diamant abgeschieden hat.

10. Kernbrennstoffelement nach Anspruch 9, **dadurch gekennzeichnet, dass** der poröse Kohlenstoff auf eine Dicke zwischen 10 Mikrometern und 90 Mikrometern abgeschieden ist.

11. Kernbrennstoffelement nach Anspruch 10, **dadurch gekennzeichnet, dass** der poröse Kohlenstoff auf eine Dicke von 95 Mikrometern abgeschieden ist.

12. Kernbrennstoffelement nach einem der Ansprüche 9 bis 11, **dadurch gekennzeichnet, dass** der pyrolytische Kohlenstoff auf eine Dicke zwischen 10 Mikrometern und 90 Mikrometern abgeschieden ist.

13. Kernbrennstoffelement nach Anspruch 12, **dadurch gekennzeichnet, dass** der pyrolytische Kohlenstoff auf eine Dicke von 40 Mikrometern abgeschieden ist.

14. Kernbrennstoffelement nach einem der Ansprüche 9 bis 13, **dadurch gekennzeichnet, dass** das Siliziumkarbid und/oder Siliziumnitrid-gebundene Siliziumkarbid eine Dicke von 30 Mikrometern hat.

15. Kernbrennstoffelement mit einem Kern, der eine Mehrzahl von Brennstoffpartikeln umfasst, wobei jedes einen in einer Matrix dispergierten Kern spaltbaren Materials und eine um den Kern herum abgeschiedene Diamantbeschichtung hat.

16. Kernbrennstoffelement nach Anspruch 15, **dadurch gekennzeichnet, dass** jedes Brennstoffpartikel einen Kern spaltbaren Materials hat, der von einer Beschichtung umgeben ist, die mindestens ein Kohlenstoffmaterial oder eine Kohlenstoffverbindung umfasst, das bzw. die aus der Gruppe bestehend aus porösem Kohlenstoff, pyrolytischem Kohlenstoff, Siliziumkarbid, Siliziumnitrid-gebundenem Siliziumkarbid und Diamant ausgewählt ist.

17. Kernbrennstoffelement nach Anspruch 15 oder 16, **dadurch gekennzeichnet, dass** die Brennstoffpartikeln in einer Grafitmatrix dispergiert sind.

18. Kernbrennstoffelement nach Anspruch 17, **dadurch gekennzeichnet, dass** die Matrix Grafitpulver und Phenolharz umfasst.

19. Kernbrennstoffpartikel mit einem Kern aus Urandioxid und um den Kern herum abgeschiedenem Diamant.

20. Kernbrennstoffpartikel nach Anspruch 19, **dadurch gekennzeichnet, dass** der Diamant auf eine Dicke zwischen 8 Mikrometern und 90 Mikrometern abgeschieden ist.

21. Kernbrennstoffpartikel nach Anspruch 20, **dadurch gekennzeichnet, dass** der Diamant eine Dicke von 40 Mikrometern hat.

22. Kernbrennstoffpartikel nach einem der Ansprüche 19 bis 21, welches mindestens ein Kohlenstoffmaterial oder eine Kohlenstoffverbindung hat, das bzw. die aus der Gruppe bestehend aus porösem Kohlenstoff, pyrolytischem Kohlenstoff, Siliziumkarbid und Siliziumnitrid-gebundenem Siliziumkarbid ausgewählt und um den Kern herum abgeschieden ist.

23. Kernbrennstoffpartikel nach Anspruch 22, welches auf seinem Kern nacheinander porösen Kohlenstoff, pyrolytischen Kohlenstoff, Siliziumkarbid und/oder Siliziumnitrid-gebundenes Siliziumkarbid und Diamant abgeschieden hat.

## Revendications

1. Procédé de préparation d'un combustible nucléaire, procédé comprenant les étapes suivantes :
déposer du carbure de silicium sur une surface de combustible nucléaire; et
au moins partiellement réduire le carbure de silicium en diamant d'une épaisseur comprise entre 8 micromètres et 90 micromètres.

2. Procédé selon la revendication 1, dans lequel le carbure de silicium déposé est du carbure de silicium de polytype bêta.

3. Procédé selon la revendication 1 ou 2, dans lequel le dépôt est opéré par des techniques de dépôt chimique en phase vapeur.

4. Procédé selon l'une quelconque des revendications précédentes, dans lequel la réduction au moins partielle du carbure de silicium inclut la réaction du carbure de silicium avec du chlorure d'hydrogène ou chlore.

5. Elément de combustible nucléaire comprenant un coeur constitué d'une pluralité de particules de combustible nucléaire dispersées dans une matrice, chaque particule de combustible ayant un noyau en matière fissible et du diamant déposé autour du noyau.

6. Elément de combustible nucléaire selon la revendication 5, dans lequel le diamant a une épaisseur comprise entre 8 micromètres et 90 micromètres.

7. Elément de combustible nucléaire selon la revendication 6, dans lequel le diamant a une épaisseur de 40 micromètres.

8. Elément de combustible nucléaire selon l'une quelconque des revendications 5 à 7 incluse, dans lequel chaque particule de combustible comporte au moins un matériau ou composé de carbone, choisi dans le groupe comprenant carbone poreux, carbone pyrolytique, carbure de silicium et carbure de silicium lié à du nitrure de silicium, déposé autour du noyau.

9. Elément de combustible nucléaire selon la revendication 8, dans lequel sont déposés successivement sur le noyau de chaque particule de combustible du carbone poreux, du carbone pyrolytique, du carbure de silicium et/ou du carbure de silicium lié à du nitrure de silicium, et du diamant.

10. Elément de combustible nucléaire selon la revendication 9, dans lequel le carbone poreux est déposé jusqu'à une épaisseur comprise entre 10 micromètres et 90 micromètres.

11. Elément de combustible nucléaire selon la revendication 10, dans lequel le carbone poreux est déposé jusqu'à une épaisseur de 95 micromètres.

12. Elément de combustible nucléaire selon l'une quelconque des revendications 9 à 11 incluse, dans lequel le carbone pyrolytique est déposé jusqu'à une épaisseur comprise entre 10 micromètres et 90 micromètres.

13. Elément de combustible nucléaire selon la revendication 12, dans lequel le carbone pyrolytique est déposé jusqu'à une épaisseur de 40 micromètres.

14. Elément de combustible nucléaire selon l'une quelconque des revendications 9 à 13 incluse, dans lequel le carbure de silicium et/ou carbure de silicium lié à du nitrure de silicium a une épaisseur de 30 micromètres.

15. Elément de combustible nucléaire, comprenant:
un coeur constitué d'une pluralité de particules de combustible, ayant chacune un noyau de matière fissible, dispersées dans une matrice; et
un revêtement en diamant déposé autour du coeur.

16. Elément de combustible nucléaire selon la revendication 15, dans lequel chaque particule de combustible comporte un noyau de matière fissible entouré d'un revêtement comprenant au moins un matériau ou composé de carbone choisi dans le groupe comprenant carbone poreux, carbone pyrolytique, carbure de silicium et carbure de silicium lié à du nitrure de silicium et diamant.

17. Elément de combustible nucléaire selon la revendication 15 ou la revendication 16, dans lequel les particules de combustible sont dispersées dans une matrice en graphite.

18. Elément de combustible nucléaire selon la revendication 17, dans lequel la matrice comprend de la poudre de graphite et de la résine phénolique.

19. Particule de combustible nucléaire, comprenant un noyau de dioxyde d'uranium et de diamant déposé autour du noyau.

20. Particule de combustible nucléaire selon la revendication 19, dans lequel le diamant est déposé jusqu'à une épaisseur comprise entre 8 micromètres et 90 micromètres.

21. Particule de combustible nucléaire selon la revendication 20, dans lequel le diamant a une épaisseur de 40 micromètres.

22. Particule de combustible nucléaire selon l'une quelconque des revendications 19 à 21 incluse, qui comprend au moins un matériau ou composé de carbone, choisi dans le groupe comprenant carbone poreux, carbone pyrolytique, carbure de silicium et carbure de silicium lié à du nitrure de silicium, déposé autour du noyau.

23. Particule de combustible nucléaire selon la revendication 22, sur le noyau de laquelle sont déposés successivement du carbone poreux, du carbone pyrolytique, du carbure de silicium et/ou du carbure de silicium lié à du nitrure de silicium, et du diamant.
